# EUROPEAN PATENT SPECIFICATION

(11) **EP 1 299 960 B1**
(45) Date of publication and mention of the grant of the patent: **01.06.2005**
(21) Application number: 00930968.3
(22) Date of filing: 05.06.2000
(51) Int. Cl.: H04B 1/707, H04J 13/02, H04J 3/06

(54) **A REVERSE SYNCHRONIZATION METHOD IN A WIRELESS SYSTEM**
UMKEHR-SYNSCHRONISIERUNGSVERFAHREN IN EINEM DRAHTLOSEN SYSTEM
PROCEDE DE SYNCHRONISATION INVERSE DANS UN SYSTEME HERTZIEN

(43) Date of publication of application: 09.04.2003
(73) Proprietor: LinkAir Communications, Inc., San Jose, California 95134 (US)
(72) Inventor: LI, Daoben, Beijing 100044 (CN); CHEN, Weidong, San Jose, CA 95134 (US); GAO, Haiyang, San Jose, CA 95134 (US); HO, Shiu Ming Joseph, San Jose, CA 95134 (US); ZHANG, Yongsheng, Beijing 100044 (CN); DENG, Yuanhua, San Jose, CA 95134 (US)
(74) Representative: Schulz, Rütger, Dr. Dipl.-Phys.
(86) International application number: PCT/CN2000/000141
(87) International publication number: WO 2001/095516

(56) References cited:
- EP-A2- 0 852 430
- WO-A-00/45530
- GB-A- 2 329 307
- US-A- 5 583 853
- LINKAIR, WG1 OF CWTS: "LAS CDMA Presentation" 3GPP RAN WG1, [Online] 10 - 14 April 2000, pages 1-27, XP002242121 Seoul, Korea Retrieved from the Internet: <URL:http://www.3gpp.org/ftp/tsg_ran/WG1_R L1/TSGR1_12/Docs/Zips/R1-00-0517.zip> [retrieved on 2003-05-22]

## Description

### Field of the Invention:

The present invention relates generally to a method for establishing and maintaining reverse synchronization in a mobile and wireless communications network.

### Background of the invention:

In a CDMA system, each remote unit modulates the data that it sends to a base station by a spreading code that is unique to the remote unit. The spread spectrum, coded signals transmitted by different remote units may overlap in both time and frequency. When these signals arrive at the receiving base station, the data sent by a remote unit are obtained by correlating the received signal with the unique spreading code of the remote unit.

It is well known that the capacity of a CDMA system is limited by the interferences. The interferences include Inter-Symbol Interference (ISI) among multipath signals from a same remote unit, Multiple Access Interferences (MAI) among signals from different remotes units in the service area of a same base station, and Adjacent Cell Interference (ACI) among signals from neighboring base stations and the remote units that they serve.

In US 5,583,853 a multipoint-to-point CDMA communication system is disclosed which comprises a plurality of CDMA-based mobile transmitting stations and a single CDMA-based receiving station, interconnected to each other via one CDMA channel and one feedback channel. On the one CDMA channel the plurality of CDMA transmitting stations simultaneously send differently coded CDMA signals to the receiving station. In the receiving station, the time differences between a reference clock signal and the spreading codes in the CDMA signals received from each of the mobile transmitting stations are measured. These time differences are then indicated via error signals said receiving station sends on the feedback channel to each of the mobile transmitting stations. Each transmitting station thereby responds to its particular error signal by time shifting its spreading code such that it arrives in the receiving station in synchronization with the aforementioned reference clock signal. This synchronization enables interference between the spreading codes at the receiving station to be reduced by using codes which have a minimal crosscorrelation when their time difference is zero. Consequently, the maximum number of mobile stations which can simultaneously transmit is increased.

WO 00/45530 relates to a direct-sequence spread spectrum (DSSS) system consisting of a modulator and a demodulator where the spreading sequence features zero correlation zone (ZCZ) properties. The despreading process consists of multiplying the received signal with the same spreading sequence, followed by a low-pass filtering, decoding and deinterleaving procedure. The chip rate of the spreading sequence for each user is normally much higher than the bit rate of the encoded input data to spread the system spectrum. The spread spectrum system, especially the related DS CDMA system, works in an interference-free mode owing to the employment of spreading sequences with ZCZ properties and due to the fact that the width of the ZCZ can be adjusted according to transmission channel conditions.

An overview of the LAS-CDMA technology, which is designed to interoperate with all 3G core networks, is given in "LAS CDMA Presentation" (3GPP RAN WG1, Seoul, Korea, April 10-14, 2000, XP-002242121) by Working Group 1 of the China Wireless Telecommunication Standard (CWTS) group. This proposal claims a six times greater spectral efficiency over any other 3G technology, twelve times greater than IS-95, with data speeds up to 5.5 Mbps and compatibility with all 3G standards. LAS CDMA technology is based on LAS (Large Area Synchronized) spreading codes which are used to provide an "interference-free window" (IFW) ranging from *-d* to +*d*, wherein *d* denotes the maximum delay dispersion of the mobile radio channel. The author describes that said LAS codes consist of different LA (Large Area) code permutations, which are used in different cell sectors to reduce adjacent cell interference (ACI), and LS (Loosely Synchronous) codes, which are used to suppress inter-symbol interference (ISI) and multiple-access interference (MAI).

In a PCT Application with inventor, number and title of it respectively as Li Daoben, PCT-CN00/00028 and "A Scheme for Spread Spectrum Multiple Address Coding with Interference Free Window" , disclosed a kind of complementary orthogonal codes referred to here as LS codes. The LS codes have a "Interference Free Window" property, which is also referred to as "zero correlation window" property. As an illustration, consider the following four LS codes of length 8:
(C1, S1) = (++-+, +---)
(C2, S2) = (+++-, +-++)
(C3, S3) = (-++-+, --+-)
(C4, S4) = (-+--, ---+)
the cross-correlation of any two of these codes is zero when the time shift between the two codes is within the (inclusive) window [-1, +1], and the autocorrelation of any of these codes is zero except when there is no time shift. Thus these four codes have an Interference Free Window of [-1, +1].

Similarly the following LS codes of length 16 have a Interference Free Window of [-3, +3]:
(C1, S1) = (++-++++-, +---+-++)
(C2, S2) = (++-+---+, +----+--)
(C3, S3) = (+++-++-+, +-+++---)
(C4, S4) = (+++---+-, +-++-+++)

If we consider only (C1,S1) and (C2,S2), they have a Interference Free Window of [-7,+7].

Thus when remote units transmit to a base station signals that are modulated using a set of LS codes that have a Interference Free Window of [-n, +n], these signals will not interfere with each other as long as they arrive at the receiving base station within n chips with respect to each other. This eliminates inter-symbol interferences and multiple access interferences when multipath signals from a same remote unit and signals from different remote units arrive within an Interference Free Window.

Hereinafter the wireless systems, the signals, the air interface which utilize LS codes as the orthogonal spread codes will be respectively referred to as LS coded wireless systems, LS coded signals, and LS coded air interface.

Hereinafter the wireless systems, the signals, the air interface which utilize orthogonal spread codes with an IFW property will be respectively referred to as IFW wireless systems, IFW signals, and IFW air interface.

### Summary of the invention:

An object of the present invention is a communications system and a synchronization method where signals from remote units arrive at a base station within an Interference Free Window.

According to the present invention, a reverse synchronization method according to claim 1 is provided, which is used in a wireless system utilizing orthogonal spreading codes with Interference Free Window characteristic, wherein the transmission time of the signal from a remote unit is adjusted with respect to a predetermined Interference Free Window [-n, +n], such that the arrival time in a base station of the signal from the said remote unit falls within the said predetermined Interference Free Window.

The said orthogonal spreading codes can be LS codes.

In order to estimate the arrival time of the signal, a reference time window [t1, t2] could be determined by the said base station with respect to the said Interference Free Window [-n, +n] and a set of remote units that are currently connected to the base station. The transmission time of the signal from a remote unit is adjusted, such that the arrival time in the said base station of the signal from the said remote unit falls within the said reference time window [t1, t2].

Preferably, In establishing reverse synchronization, it could be comprised of the following teps:

The said base station transmits a synchronization signal on the downlink;

Each remote unit that attempts to establish reverse synchronization with the said base station transmits an access signal to the said base station on the uplink;

The base station determines the arrival time of each access signal from a remote unit;

The said base station sends the time difference between the arrival time and the said reference time window [t1, t2] to the remote unit on the downlink, while the remote unit adjusts the transmission time of its access signal according to the said time difference.

Preferably, In reverse synchronization maintenance, it could be comprised of the following teps:

The base station determines the arrival times of the control and traffic signals from all remote units within the same group that require a Interference Free Window [-n, +n];

The base station sends time adjustments to remote units in the group whose transmission time should be adjusted, and the corresponding remote units adjusts their transmission time for control and traffic signals accordingly.

The use of a reference time window leads to faster reverse synchronization compared to synchronization with respect to a single time point. Consequently different remote units may maintain reverse synchronization with respect to different reference time windows.

### Brief description of the attached drawings:

The accompanying drawings which are incorporated in and constitute a part of this specification, illustrate particular embodiments of the invention, and together with the description, serve to explain, but not restrict, the principles of the invention.
FIG.1 illustrates a cellular system with multiple cells.
FIG.2 illustrates a base station and a plurality of remote units in one cell.
FIG. 3 illustrates the structure of a Forward Sync Channel on the downlink in a preferred embodiment of the present invention.
FIG. 4 illustrates the structure of the Reverse Sync Channel on the uplink in a preferred embodiment of the present invention.
FIG. 5 illustrates the arrival times of signals from four different remote units that are normalized to the beginning of a frame according to a preferred embodiment of the present invention.

### Detailed Description of the Invention:

According to the present invention, as embodied and broadly described in, a system and a method are provided for establishing and maintaining reverse synchronization of remote units where signals from remote units in the same cell arrive at the base station in the cell within a zero-correlation window. The said system comprises the following components:
- A cellular system with multiple cells serving a geographic area;
- A base station in each cell that uses complementary orthogonal codes and that transmits code division multiplexed and time division multiplexed signals to remote units;
- A plurality of remote units that use complementary orthogonal codes and that transmit spread spectrum signals through code division multiple access and time division multiple access;

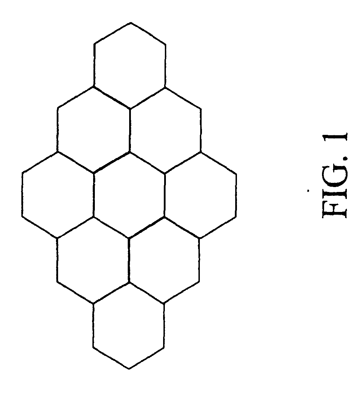

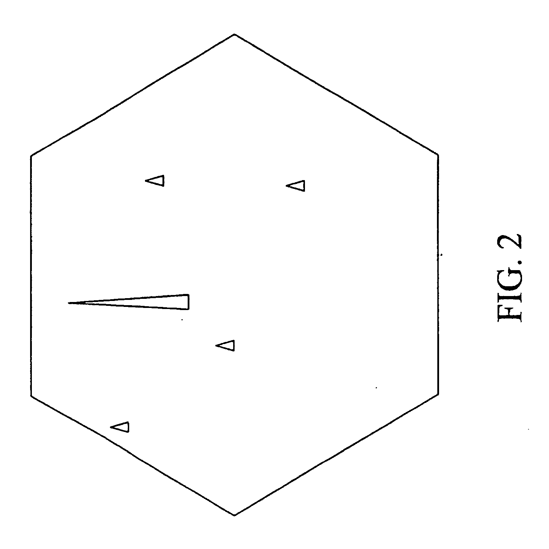

A preferred embodiment of a communications system of the present invention, as shown in FIG. 1, includes a cellular system comprising multiple cells that serve a geographic area, a base station in each cell providing a downlink signal to remote units in the cell, and a plurality of remote units in each cell. FIG. 2 shows a base station and a plurality of remote units in a cell. The base station includes transmitters and receivers and appropriate processors for implementing the methods of the present invention. Each of the plurality of remote units includes a transmitter, a receiver, and an appropriate processor for implementing the methods of the present invention.

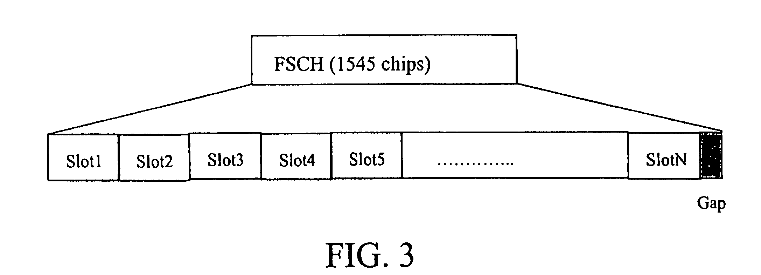

FIG. 3 illustrates the structure of the Forward Sync Channel on the downlink in a preferred embodiment of the present invention. It is divided into a number (N) of slots of equal length, followed by a gap. Each slot is spread by using a spreading code. To reduce the adjacent cell interference, different base stations in different, nearby cells should use different spreading codes for the Forward Sync Channel. For example, the Forward Sync Channel can be divided into 12 slots of 128 chips each followed by a gap of 9 chips, and each slot can be spread by using an LS code of length 128 or some transformation of an LS code as disclosed in PCT-CN98/00028.

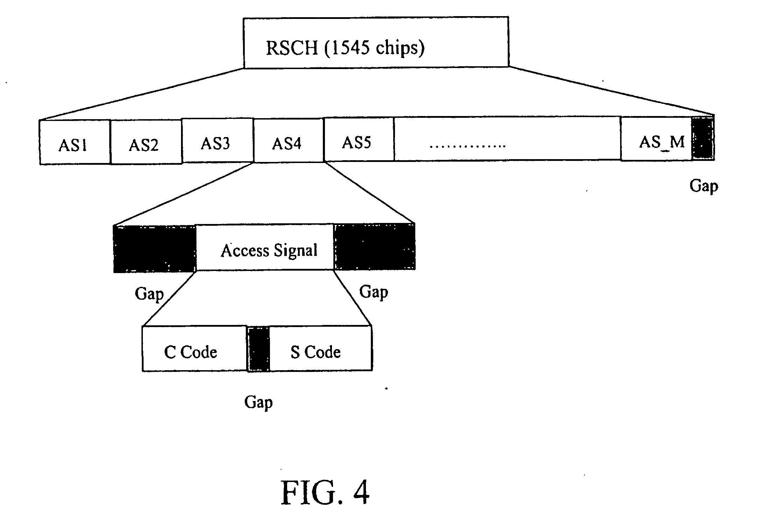

FIG. 4 illustrates the structure of the Reverse Sync Channel on the uplink in a preferred embodiment of the present invention. It is divided into a number (M) of access slots (AS) of equal length, followed by a gap. Each access slot is used by remote units to send access signals to a base station for reverse synchronization. As illustrated in FIG. 4, an access slot contains an access signal, with gaps on both sides of an access signal to provide room for adjusting the transmission time of an access signal in order for a remote unit to achieve reverse synchronization with a base station. An access signal can be a spread spectrum signal using an orthogonal code, such as an LS code or any transformation of an LS code. FIG. 4 illustrates a preferred embodiment of an access signal that is spread using an LS code with some gap between the C code and the S code.

The length of an access slot is determined according to the length of an access signal and the maximum delay from a remote unit to a base station when the remote unit attempts to establish reverse synchronization with the base station.

To reduce the adjacent cell interference, different, nearby base stations should use different spreading codes for access signals on the Reverse Sync Channel.

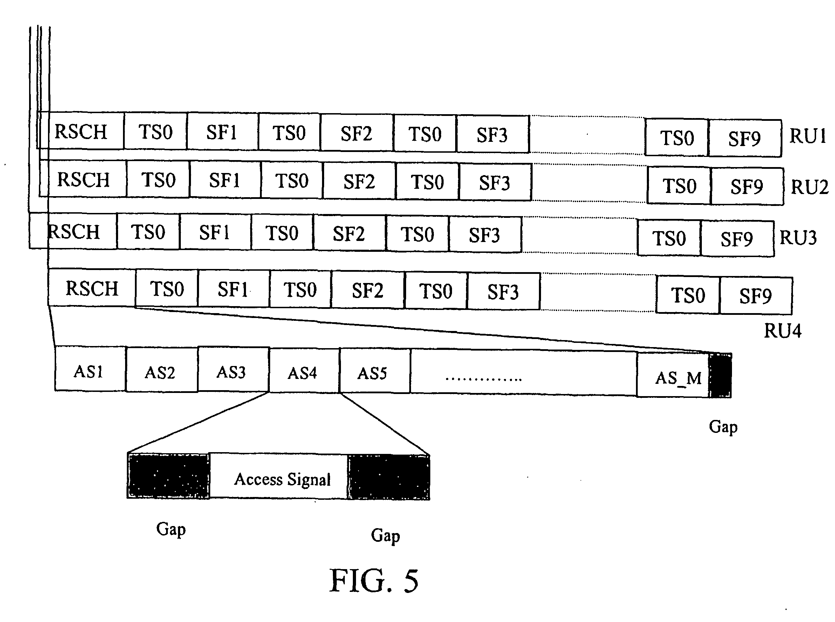

When considering the arrival time of a signal from a remote unit that transmits in only designated time slots and sub-frames, the arrival time is normalized to the beginning of the 20 ms frame on the uplink. FIG. 5 illustrates the arrival times of signals from four different remote units that are normalized to the beginning of a 20 ms frame. Remote units RU1, RU2, and RU3 are currently connected to a base station and are transmitting control and traffic signals within their allocated time slot and sub-frame using their allocated spreading codes. The transmissions from RU1 and RU3 overlap in time, but they use different spreading codes. Remote unit RU4 attempts to establish reverse synchronization by transmitting an access signal, where the access signal is always considered to be in the middle of an access slot when normalizing the arrival time of an access signal to the beginning of a 20 ms frame on the uplink.

A set of remote units are considered to be synchronized with each other with respect to a zero-correlation window [-n, +n] if the time difference between the arrival times of any two remote units in the set is no more than n chips.

The preferred embodiment of a reverse synchronization method comprises the following steps.
1. A base station transmits a synchronization signal on the downlink on the Forward Sync Channel;
2. Each remote unit that attempts to establish reverse synchronization with the base station randomly chooses an access slot in the Reverse Sync Channel and transmits an access signal to the base station on the uplink;
3. The base station determines the arrival time of each access signal from a remote unit;
4. With respect to a given zero-correlation window [-n, +n], and a set of remote units that are currently connect to the base station and are synchronized with respect to the zero-correlation window [-n, +n], i.e., the time difference between the arrival times of any two currently connected remote units is no more than n chips, the base station determines a reference time window [t1, t2] such that if the arrival time of the access signal from a remote unit falls within [t1, t2], then it is synchronized with all currently connected remote units with respect to the zero-correlation window [-n, +n];
5. If the arrival time of the access signal from a remote unit falls within the time interval [t1, t2], then the remote unit has achieved reverse synchronization with the base station with respect to the zero-correlation window [-n, +n], and the base station sends to the remote unit any information of the spreading code and time slots and sub-frames for the remote unit to transmit control and traffic data and the remote unit starts to transmit control and traffic data using the allocated spreading code and allocated time slots and sub-frames;
6. If the arrival time of the access signal from a remote unit falls outside of the time interval [t1, t2], the base station computes a time difference between the arrival time and the time interval [t1, t2] and sends the time difference to the remote unit on the downlink; the remote unit adjusts the transmission time of its access signal and go to step 2.

The communication system of the present invention provides both time division multiple access using time slots and sub-frames and code division multiple access using LS codes. Remote units within a cell served by a base station may have experience different time dispersion and propagation environments. The remote units are put into different groups with different zero-correlation windows. For example, remote units that are close to a base station can be put into a group with a zero-correlation window of [-1, +1] since the maximum time dispersion for these remote units may be small, and remote units that are farther away from a base station can be put into another group with a zero-correlation window of [-3, +3]. These two different groups of remote units can be allocated control and traffic channels in separate time slots and sub-frames. As an example, the nine time slot (TS0) - sub-frame pairs can be divided into three groups, one for remote units that have the best propagation environment with a zero-correlation window of [0, 0], another for remote units that require a zero-correlation window of [-1, +1], and another for remote units that require a zero-correlation window of [-3, +3]. The multipath access signals from a same remote unit can be used by a base station to decide which group the remote unit belongs to, which time slots and sub-frames can be allocated to the remote unit, and to which zero-correlation window it needs to establish reverse synchronization.

After a remote unit establishes reverse synchronization with a base station and starts to transmit control and traffic signals to the base station, the reverse synchronization can be maintained with respect to a zero-correlation window of [-n, +n] within a group of remote units using the following preferred embodiment of a synchronization maintenance method:
1. A plurality of remote units that are connected to a base station transmit control and traffic signals to a base station using some spreading code in some designated time slots and sub-frames;
2. The base station determines the arrival times of the control and traffic signals from all remote units within the same group that require a zero-correlation window of [-n, +n];
3. If there is no pair of remote units in the group whose arrival times are more than n chips apart, the reverse synchronization is maintained with respect to a zero-correlation window of [-n, +n]; otherwise, the base station sends time adjustments to remote units in the group whose transmission time should be adjusted, and the corresponding remote units adjusts their transmission time for control and traffic signals accordingly.

The use of a reference time window leads to faster reverse synchronization compared to synchronization with respect to a single time point. Consequently different remote units may maintain reverse synchronization with respect to different reference time windows.

## Claims

1. A reversed synchronisation method, which is used in a wireless system utilising orthogonal spreading codes with interference free window characteristic, wherein:
the transmission time of the signal from a remote unit is adjusted with respect to a predetermined interference free window [-N, +N], such that the arrival time in a base station of the signal from the said remote unit falls within the said predetermined interference free window,
**characterised in that**
the remote units are put into different groups with different interference-free windows, wherein remote units close to a base station are put in one group and remote units further from the base station are put into another group.

2. A method according to claim 1,
**characterised in that**
the said orthogonal spreading codes are LS codes.

3. A method according to claim 1,
**characterised in that**
- a reference time window [T1, T2] is determined by the said base station with respect to the said interference free window [-N, +N] and a set of remote units that are currently connected to the base station, and
- the transmission time of the signal from a remote unit is adjusted, such that the arrival time in the said base station of the signal from the said remote unit falls within the said reference time window [T1, T2].

4. A method according to claim 3,
**characterised by** the following steps in establishing reverse synchronisation:
- said base station transmits a synchronisation signal on the downlink,
- each remote unit that attempts to establish reverse synchronisation with said base station transmits an access signal to said base station on the uplink,
- the base station determines the arrival time of each access signal from a remote unit, and
- said base station sends the time difference between the arrival time and the reference time window [T1, T2] to the remote unit on the downlink, while the remote unit adjusts the transmission time of its access signal according to said time difference.

5. A method according to any of the preceding claims,
**characterised in that**
it further comprises the following steps in reverse synchronisation maintenance:
- the base station determines the arrival times of the control and traffic signals from all remote units within the same group that require an interference free window [-N, +N], and
- the base station sends time adjustments to remote units in the group whose transmission time should be adjusted, and the corresponding remote units adjust their transmission time for control and traffic signals accordingly.

## Patentansprüche

1. Umkehrsynchronisationsverfahren, welches in einem Drahtlossystem unter Verwendung von Orthogonalausbreitungscodes mit beeinflussungsfreier Fenstercharakteristik verwendet wird, wobei:
die Übertragungszeit des Signals von einer Ferneinheit in Bezug auf ein vorher bestimmtes beeinflussungsfreies Fenster [-N, +N] eingestellt wird, so dass die Ankunftszeit in einer Basisstation des Signals von der Ferneinheit in das vorher festgelegte beeinflusszangsfreie Fenster fällt,
**dadurch gekennzeichnet, dass**
die Ferneinheiten in unterschiedliche Gruppen mit unterschiedlichen beeinflussungsfreien Fenstern gesetzt werden, wobei Ferneinheiten nahe an einer Basisstation in eine Gruppe gesetzt werden, und Ferneinheiten weiter weg von der Basisstation in eine andere Gruppe gesetzt werden.

2. Verfahren nach Anspruch 1,
**dadurch gekennzeichnet, dass**
die Orthogonalausbreitungscodes LS-Codes sind.

3. Verfahren nach Anspruch 1,
**dadurch gekennzeichnet, dass**
- ein Referenzzeitfenster [T1, T2] durch die Basisstation in Bezug auf das beeinflussungsfreie Fenster [-N, +N] und einen Satz von Femeinheiten, welche aktuell mit der Basisstation verbunden sind, bestimmt wird, und
- die Übertragungszeit des Signals von einer Ferneinheit so eingestellt wird, dass die Ankunftszeit in der Basisstation des Signals von der Femeinheit in das Referenzzeitfenster [T1, T2] fällt.

4. Verfahren nach Anspruch 3,
**gekennzeichnet durch** die folgenden Schritte beim Einrichten von Umkehrsynchronisation:
- die Basisstation überträgt ein Synchronisationssignal in der Abwärtsrichtung,
- jede Femeinheit, welche versucht, Umkehrsynchronisation mit der Basisstation einzurichten, überträgt ein Zugriffssignal zur Basisstation in der Aufwärtsrichtung,
- die Basisstation bestimmt die Ankunftszeit jedes Zugriffssignals von einer Ferneinheit, und
- die Basisstation sendet die Zeitdifferenz zwischen der Ankunftszeit und dem Referenzzeitfenster [T1, T2] zur Ferneinheit in der Abwärtsrichtung, während die Ferneinheit die Übertragungszeit ihres Zugriffssignals gemäß der Zeitdifferenz einstellt.

5. Verfahren nach einem der vorhergehenden Ansprüche,
**dadurch gekennzeichnet, dass**
dieses außerdem die folgenden Schritte bei Umkehrsynchronisations-Aufrechterhaltung umfasst:
- die Basisstation bestimmt die Ankunftszeiten der Steuerungs- und Verkehrssignale von allen Ferneinheiten innerhalb der gleichen Gruppe, die ein beeinflussungsfreies Fenster [-N, +N] erfordern, und
- die Basisstation sendet Zeiteinstellungen zu Ferneinheiten in der Gruppe, deren Übertragungszeit eingestellt werden sollte, und die entsprechenden Ferneinheiten stellen ihre Übertragungszeit für Steuerungs- und Verkehrssignale entsprechend ein.

## Revendications

1. Procédé de synchronisation inverse utilisé dans un système hertzien utilisant des codes par étalement orthogonaux avec une caractéristique de fenêtre sans interférence, dans lequel :
la durée d'émission du signal d'une unité distante est ajusté par rapport à une fenêtre sans interférence prédéterminée (- N, + N), de telle sorte que le temps d'arrivée dans une station de base du signal provenant de cette unité tombe dans la fenêtre sans interférence prédéterminée,
**caractérisé en ce que**
les unités distantes sont placées dans différents groupes avec différentes fenêtres sans interférence, les unités distantes proches d'une station de base étant placées dans un groupe, et les unités distantes plus éloignées de la station de base étant placées dans un autre groupe.

2. Procédé selon la revendication 1,
**caractérisé en ce que**
les codes par étalement orthogonaux sont des codes LS.

3. Procédé selon la revendication 1,
**caractérisé en ce qu'**
- une fenêtre de temps de référence (T1, T2) est déterminée par la station de base par rapport à la fenêtre sans interférence (-N, +N) et un ensemble d'unités distantes qui sont connectées à ce moment-là à la station de base, et
- la durée d'émission du signal d'une unité distante est ajustée de telle sorte que le temps d'arrivée dans la station de base du signal provenant de l'unité distante tombe dans la fenêtre de temps de référence (T1, T2).

4. Procédé selon la revendication 3,
**caractérisé par** les étapes suivantes d'établissement de la synchronisation inverse :
- la station de base transmet un signal de synchronisation sur la liaison descendante,
- chaque unité distante qui essaie d'établir la synchronisation inverse avec la station de base transmet un signal d'accès à la station de base sur la liaison montante,
- la station de base détermine le temps d'arrivée de chaque signal d'accès provenant d'une unité distante, et
- la station de base envoie la différence de temps entre le temps d'arrivée et la fenêtre de temps de référence (T1, T2) à l'unité distante sur la liaison descendante, tandis que l'unité distante ajuste la durée d'émission de son signal d'accès en fonction de cette différence de temps.

5. Procédé selon l'une quelconque des revendications précédentes,
**caractérisé en ce qu'**
il comprend, en outre, les étapes suivantes de maintenance de synchronisation inverse :
- la station de base détermine les temps d'arrivée des signaux de commande et de trafic provenant de toutes les unités distantes à l'intérieur du même groupe qui ont besoin d'une fenêtre sans interférence (-N, +N), et
- la station de base envoie des ajustements de temps aux unités distantes dans le groupe dont la durée d'émission doit être ajustée, et les unités distantes correspondantes ajustent leur durée d'émission des signaux de commande et de trafic de façon correspondante.
